# EUROPEAN PATENT APPLICATION

(11) **EP 0 720 923 A2**
(43) Date of publication of application: **10.07.1996**
(21) Application number: 96300131.8
(22) Date of filing: 08.01.1996
(51) Int. Cl.: B60C 7/10

(54) **A wheel**

(30) Priority: 06.01.1995 GB 9500233
(71) Applicant: FLEXELLO LIMITED, Slough, Bucks SL1 4ED (GB)
(72) Inventor: Walker, Phillip S., Slough, Berks SL3 6LX (GB)
(74) Representative: Everitt, Christopher James Wilders

(57) **Abstract**

A composite wheel comprises a metal or plastic hub 10 with a solid tyre 11. The tyre comprises an inner annular portion 12 of rubber and an outer peripheral strip 13 of high quality polyurethane which forms a tread of the tyre 11 and which adheres to the annular portion 12. The inner portion 12 is bonded to the hub 10. The radial thickness of the inner portion 12 is about three times that of the strip 13. As a result deflection of the strip 13 relative to the hub 10 is allowed as the wheel traverses a bump.

## Description

This invention relates to a wheel comprising a hub having a solid tyre moulded thereon.

Conventional wheels with solid tyres either suffer from a lack of resilience in the tyre and are noisy over rough surfaces or are difficult to manoeuvre because their tyres include a large section of a softer, more resilient elastomeric material which spreads at the area of contact with a surface when the wheel is loaded. A typical example of the former comprises a metal hub with a polyurethane tyre moulded directly thereon. An advantage of using polyurethane is that it is relatively unaffected by cold temperatures but it is expensive.

GB-A-1123704 discloses a composite solid tyre of elastomeric materials which comprises three superimposed layers. The inner layer is made of a tough rubber (hardness 80-95 Shore A) and is reinforced by inextensible wire rings. The middle layer is a cushioning layer which is distinguished by its elasticity, having a hardness within the range 55-68 Shore A. The outer layer forms a tread and extends radially inwardly to form tyre sidewalls. It is formed of a rubber which has a hardness in the range 65-72 Shore A and which is chosen for its cut and abrasion resistance. The adjacent layers are vulcanised together. The cross-sectional shapes for the middle and outer layers are so chosen and the properties of the materials so forming them are so chosen that, when the solid tyre is subjected to a radial load it has a spring characteristic corresponding to that of a pneumatic tyre of equal load bearing capacity. Despite the fact that the rubber from which the outer layer is formed is chosen for its wear resistance, it is relatively soft as compared to polyurethane and the manoeuvrability of the resultant tyre is poor.

GB-A-2035229 discloses a tyre having an annular tread made of a mouldable synthetic resin material (eg. polyurethane) which is injection moulded onto an annular mass of a rigid mouldable synthetic material (eg. acrylonitrile-butadiene-styrene). In one embodiment the latter is mechanically intercoupled at its radially-inner surface with a hard rubber disc so that the resultant tyre will have the appearance of a hard rubber tyre.

An object of this invention is to provide a better compromise between the apparently conflicting characteristics of resilience on the one hand and manoeuvrability and wear resistance on the other hand.

Until recently no practical method of bonding polyurethane directly to an elastomeric material was known. However means for adhering polyurethane to rubber have been developed and the preferred embodiment of the present invention makes use of that to form a composite wheel having a solid tyre with a polyurethane tread portion bonded directly to an inner annular tyre part formed of a softer resilient elastomeric material.

According to this invention there is provided a composite wheel having a solid tyre moulded thereon, the tyre comprising a peripheral strip of a hard wear resistant and substantially rigid material, especially polyurethane, which forms a tread, and an annular portion of elastomeric material sandwiched between and bonded directly to both of the peripheral strip and the hub, the elastomeric material being softer than the hard wear resistant rigid material and being resilient, the radial thickness of the annular portion being several times that of the peripheral strip which is thin enough to flex so as to flatten locally as the wheel traverses a bump, such flexing of the peripheral strip being accompanied by corresponding deformation of the material of the annular portion which provides a restoring force tending to return the peripheral strip to its normal circular form.

A composite wheel in which this invention is embodied will be described now, by way of example, with reference to the accompanying drawings, of which:-
Figure 1 is a side elevation of the composite wheel;
Figure 2 is a section on the line II-II in Figure 1;
Figure 3 is a side view of a castor fitted with the wheel shown in Figures 1 and 2 running on a flat surface; and
Figure 4 is a view similar to Figure 3 showing the wheel traversing a bump.

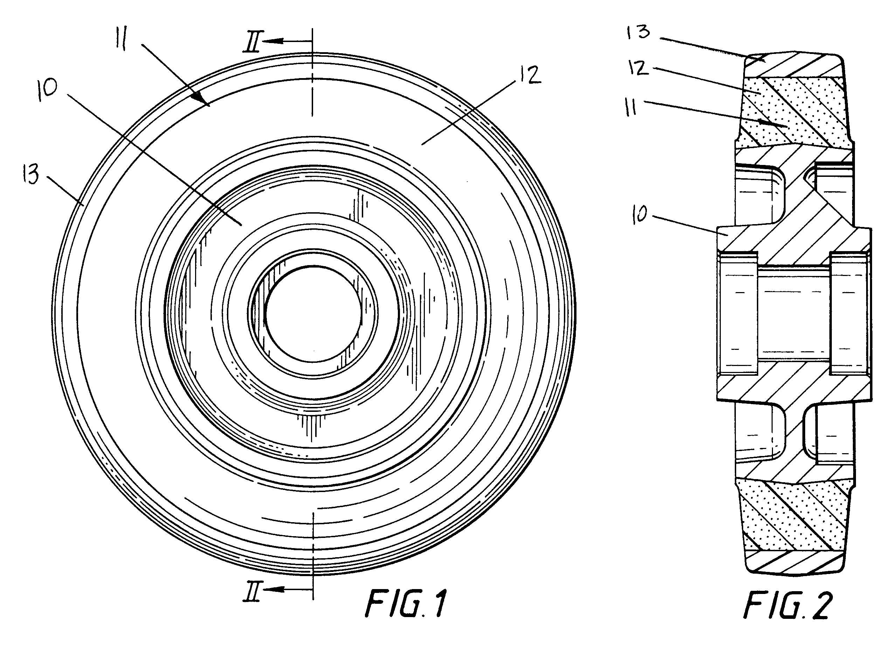

Figures 1 and 2 show a wheel which comprise a metal hub 10 with a solid tyre 11. The tyre 11 comprises an inner annular portion 12 of rubber and an outer peripheral strip 13 of polyurethane which forms a tread of the tyre 11 and which adheres to the inner annular portion 12 at their mating annular surface. The inner annular portion is bonded to the hub 10. In the plane II-II, which is the central plane normal to the axis of rotation of the wheel, the thickness of the inner annular portion 12 is about 3 times that of the peripheral strip 13.

The polyurethane from which the peripheral strip 13 is formed is a high quality polyurethane with a hardness of 95 Shore A. The rubber from which the inner annular portion 12 is made is a softer material with a hardness of 75 Shore A. It is important to use high quality materials because the tyre 11 can heat up during running to such an extent that deterioration of inferior quality materials can be caused which leads to a loss of shape and the materials becoming plastic.

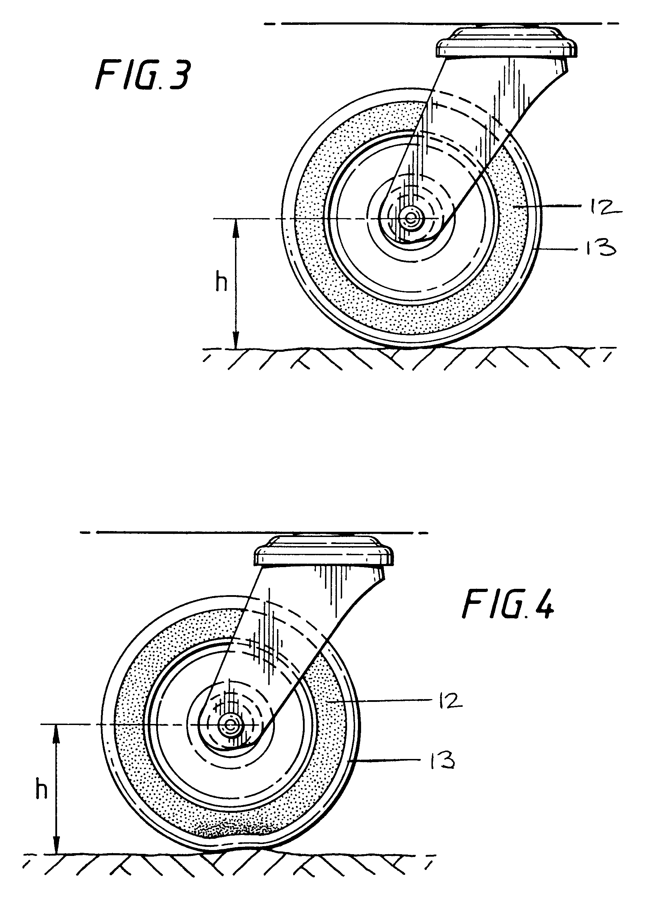

The relative radial thicknesses of the strip 13 and the inner annular portion 12 are such that deflection of the peripheral strip 13, relative to the hub 10 is allowed as the wheel traverses a bump (as is shown in Figure 4 as compared to the state of the wheel as shown in Figure 3), the strip 13 flexing radially, perhaps as far as becoming flat locally to assume the line of a chord of the wheel circumference, this being accommodated by local resilient deformation of the rubber of the inner annular portion 12. At the same time the strip 13 is sufficiently thick to ensure its structural integrity and provide the desired wear resistance which leads to the manoeuvrability of the wheel being good. If the strip 13 is too thin, the polyurethane is liable to be overstressed. The wheel also has good resilience. This is due to the rubber of the inner annular portion 12 and is illustrated by dropping the wheel from a height of about 1 metre onto its tread.

When dropped in this way, the wheel rebounds to approximately the height from which it was dropped. The rubber from which the inner annular portion 12 is made must have an adequate tear strength and an adequate tensile strength to enable it to withstand the loads to which it will be subjected during running.

The hub 10 may be formed of plastic.

## Claims

1. A composite wheel having a solid tyre moulded thereon, the tyre comprising a peripheral strip of hard wear resistant and substantially rigid material which forms a tread and an annular portion of elastomeric material sandwiched between and bonded directly to both of the peripheral strip and the hub, the elastomeric material being softer than the hard wear resistant rigid material and being resilient, the radial thickness of the annular portion being several times that of the peripheral strip which is thin enough to flex so as to flatten locally as the wheel traverses a bump, such flexing of the peripheral strip being accompanied by corresponding deformation of the material of the annular portion which provides a restoring force tending to return the peripheral strip to its normal circular form.

2. A composite wheel according to claim 1, wherein the peripheral strip is formed of polyurethane.

3. A composite wheel according to claim 1 or claim 2, wherein the annular portion is formed of rubber.

4. A composite wheel according to claim 3 when appended to claim 2, wherein the polyurethane is a high quality polyurethane with a hardness of the order of 95 shore A and the rubber from which the annular portion is made is a softer material having a hardness of the order of 75 Shore A.

5. A composite wheel according to any one of claims 1 to 4, wherein the radial thickness of the annular portion, measured in the central diametral plane of the wheel, is of the order of 3 times that of the peripheral strip.

6. A composite wheel according to any one of claims 1 to 5, wherein the hub is formed of metal.

7. A composite wheel according to any one of claims 1 to 5, wherein the hub is formed of plastic.

8. A composite wheel substantially as described hereinbefore with reference to and as shown in the accompanying drawings.
